(19) Europäisches Patentamt
European Patent Office
Office européen des brevets

(11) **EP 4 343 370 B1**

(12) **EUROPEAN PATENT SPECIFICATION**

(45) Date of publication and mention
of the grant of the patent:
**22.10.2025 Bulletin 2025/43**

(21) Application number: **21945418.8**

(22) Date of filing: **15.06.2021**

(51) International Patent Classification (IPC):
*G01S 7/40* (2006.01)          *G01C 25/00* (2006.01)
*G01C 21/30* (2006.01)          *B60W 60/00* (2020.01)
*G01S 7/497* (2006.01)          *G01S 13/86* (2006.01)
*G01S 13/931* (2020.01)

(52) Cooperative Patent Classification (CPC):
**G01C 25/005; B60W 60/001; G01C 21/30;
G01S 7/4026; G01S 7/4086; G01S 7/497;
G01S 13/867; G01S 13/931;** G01S 2013/9323

(86) International application number:
**PCT/CN2021/100139**

(87) International publication number:
**WO 2022/261825 (22.12.2022 Gazette 2022/51)**

(54) **CALIBRATION METHOD AND DEVICE FOR AUTOMATIC DRIVING VEHICLE**

KALIBRIERVERFAHREN UND -VORRICHTUNG FÜR AUTOMATISCH FAHRENDES FAHRZEUG

PROCÉDÉ ET DISPOSITIF D'ÉTALONNAGE POUR VÉHICULE À CONDUITE AUTOMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.03.2024 Bulletin 2024/13**

(73) Proprietor: **Shenzhen Yinwang Intelligent
Technologies Co., Ltd.
Shenzhen City, Guangdong 518129 (CN)**

(72) Inventors:
• **LU, Yuanzhi
  Shenzhen, Guangdong 518129 (CN)**
• **CHANG, Chenchen
  Shenzhen, Guangdong 518129 (CN)**

• **WANG, Jun
  Shenzhen, Guangdong 518129 (CN)**

(74) Representative: **Gill Jennings & Every LLP
The Broadgate Tower
20 Primrose Street
London EC2A 2ES (GB)**

(56) References cited:
WO-A1-2019/218353          CN-A- 106 981 082
CN-A- 109 084 794          CN-A- 109 211 298
CN-A- 109 343 061          CN-A- 109 901 139
CN-A- 111 077 506          CN-A- 111 169 469
JP-A- 2020 093 730          US-A1- 2019 031 193
US-A1- 2019 064 823          US-A1- 2019 324 463

## Description

### TECHNICAL FIELD

This application relates to the field of autonomous vehicles (Autonomous vehicles, AVs), and in particular, to an autonomous vehicle calibration method, and an apparatus.

### BACKGROUND

At present, an autonomous driving technology has attracted much attention. An ADAS (Advanced Driver Assistance System, advanced driver assistance system) is a necessary configuration for implementing complete or partial autonomous driving of a vehicle, and relates to a plurality of subsystems such as sensing fusion, planning control, and power and chassis execution mechanisms. An algorithm model of each subsystem includes a large quantity of ECU (Electronic Control Unit, electronic control unit) control parameters that need to be calibrated. The advanced driver assistance system further has an ECU on-board diagnosis function for identifying a faulty element. A diagnosis parameter included in the foregoing function also needs to be calibrated. A vehicle calibration process, including optimization of ECU parameters and optimization of parameters of the algorithm model, is critical to vehicle performance. It can be said that calibration precision directly relates to whether an autonomous driving function can run normally and accurately.

In order to obtain a high-precision calibration result, high-quality traveling data needs to be collected for calibration of each parameter. In addition, to meet a demand for mass production of vehicles, the traveling data further needs to be quickly collected to implement efficient calibration. In the conventional technologies, a human-driven vehicle needs to collect traveling data at a specific static station/or a dynamic calibration channel. During manual driving, it is difficult to travel precisely along a required trajectory at a required speed. Consequently, collected data is of low quality. Besides, when the human-driven vehicle performs data collection, collected data may not be of high quality, and therefore data needs to be re-collected. This affects a speed of data collection. In addition, manual driving tends to be restricted by external environmental conditions and physical conditions. This also affects the speed of data collection.

Therefore, a technology for automatic and quick collection of high-quality traveling data is required, so as to perform high-precision and efficient calibration.

Document WO 2019/218353 A1 forms part of the relevant background art and discloses a method for operating an autonomous driving vehicle with drifting error correction. This document discloses a calibration method for autonomous vehicles, comprising a drifting correction between a planning stage and a controlling stage. A planning module plans a path for a current driving cycle to drive the vehicle from the current location for a predetermined period of time. The planning module performs a first drifting error correction on the trajectory by modifying at least a starting point of the trajectory based on the first drifting error, to generate a modified trajectory. A control module controls the vehicle to drive according to the modified trajectory, including performing a second drifting error correction based on a second drifting error. As a result, the vehicle can drive according to a path closer to an ideal situation.

Document US 2019/064823 A1 also forms part of the relevant background art and discloses an autonomic vehicle control system including a perception module of a spatial monitoring system that is disposed to monitor a spatial environment proximal to the autonomous vehicle. A desired trajectory is determined along an x- and y-positions and a heading. An estimated trajectory is determined based upon actual vehicle states, and a trajectory error is calculated based on the difference between the actual and desired states. A trajectory error is monitored over a time horizon, and a first "state of health" is determined based upon the trajectory error over the time horizon. Document US 2019/324463 A1 also forms part of the relevant background art and discloses a method for planning a path to drive an autonomous driving vehicle. This document discloses a method for drifting correction for planning a path for an autonomous vehicle. A drifting error is calculated between an expected and an actual (measured) location. At least a starting point for the path for the current driving cycle is modified based on the drifting error, generating a modified path, which is subsequently used to control the vehicle.

### SUMMARY

This application provides an autonomous vehicle calibration method and apparatus that can automatically and quickly collect high-quality traveling data. The invention is defined by the independent claims. Preferred embodiments are listed in the dependent claims.

### BRIEF DESCRIPTION OF DRAWINGS

The following further describes features of this application and a relationship between the features with reference to the accompanying drawings. The accompanying drawings are all examples, and some features are not shown in actual proportions. In addition, in some accompanying drawings, common features that are not mandatory for this application in the field of this application may be omitted. Alternatively, additional features that are not mandatory for this application are not shown. A combination of the features shown in the accompanying drawings is not intended to limit this application. In addition, in this specification, same reference numerals represent same content. The specific accompanying drawings are described as follows:

FIG. 1 is a schematic diagram of a function structure of an autonomous vehicle according to an embodiment of this application;

FIG. 2 is a schematic diagram of a calibration implementation process of an advanced driving assist system;

FIG. 3 is a schematic diagram of a calibration site according to an embodiment of this application;

FIG. 4 is a schematic diagram of a VIL/MOP processing principle according to an embodiment of this application;

FIG. 5 is a schematic diagram of a coordinate conversion method according to an embodiment of this application;

FIG. 6 is a schematic flowchart of an autonomous vehicle calibration method according to an embodiment of this application;

FIG. 7 is a schematic diagram of another calibration site according to an embodiment of this application;

FIG. 8 is a schematic diagram showing a trajectory tracking process according to an embodiment of this application;

FIG. 9 is a schematic diagram of a structure of an autonomous vehicle calibration apparatus according to an embodiment of this application; and

FIG. 10 is a schematic diagram of a structure of an electronic apparatus according to an embodiment of this application.

## DESCRIPTION OF EMBODIMENTS

The following describes the technical solutions of this application with reference to accompanying drawings.

First, autonomous driving and definition of autonomous vehicle in this application are described. Autonomous driving refers to a capability of a vehicle to automatically implement driving tasks such as path planning, behavior decision-making, and motion planning (speed and trajectory planning). Autonomous driving includes five levels: L1, L2, L3, L4, and L5. L1: Assisted driving. Vehicles provide driving for one of operations in the steering wheel and acceleration and deceleration, and human drivers are responsible for other driving actions. L2: Partial autonomous driving. Vehicles provide driving for a plurality of operations in the steering wheel and acceleration and deceleration, and human drivers are responsible for other driving actions. L3: Conditional autonomous driving. Most driving operations are performed by vehicles, and human drivers need to concentrate attention for future use. L4: Highly autonomous driving. All driving operations are performed by vehicles, and human drivers do not need to concentrate attention, but the road and environment conditions are limited. L5: Fully autonomous driving. All driving operations are performed by vehicles, and human drivers do not need to concentrate attention, and the road and environment are not limited. The autonomous vehicle in this application is a vehicle that can implement autonomous driving at level L2 or above.

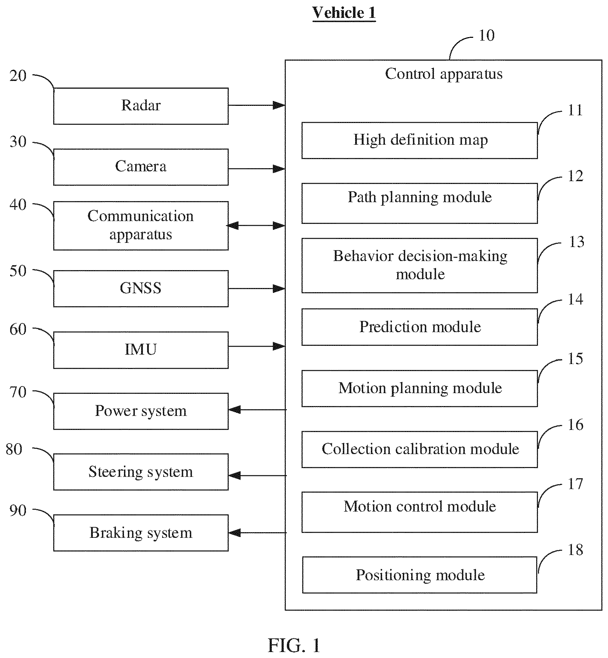

FIG. 1 is a schematic diagram of a function structure of a vehicle 1 used as an autonomous vehicle. As shown in FIG. 1, the vehicle 1 has a control apparatus 10. The vehicle 1 further has a radar 20, a camera 30, a communication apparatus 40, a GNSS (Global Navigation Satellite System, global navigation satellite system) 50, an IMU (Inertial Measurement Unit, inertial measurement unit) 60, a power system 70, a steering system 80, and a braking system 90.

The camera 20 and the radar 30 are configured to sense a surrounding environment of the vehicle 1, and output perception information to the control apparatus 10. The radar 20 may include a laser radar, a millimeter-wave radar, an ultrasonic radar, and the like. There may be one or more cameras 30. The communication apparatus 40 is configured to perform wireless communication with an external device such as a base station or a management platform. The power system 70 has an unillustrated drive ECU and an unillustrated drive source. The driving ECU can control the driving source based on an instruction sent from the control apparatus 10, so as to control the driving force. The steering system 80 has an unillustrated steering ECU, that is, an EPS (Electric Power Steering, electric power steering system) ECU, and an unillustrated EPS motor. The steering ECU can control the EPS motor based on the instruction sent from the control apparatus 10, thereby controlling the orientation of the wheel. The braking system 90 has an unillustrated braking ECU and an unillustrated braking mechanism. The braking ECU can control the braking mechanism based on the instruction sent from the control apparatus 10, thereby controlling the braking force.

For example, the control apparatus 10 may be implemented by an ECU, or may be implemented by a combination of a plurality of ECUs. The ECU is a computing apparatus including a processor, a memory, and a communication interface that are connected by using an internal bus. The memory stores program instructions. When the program instruction is executed by the processor, a function of a corresponding functional module is played. These function modules include a path planning module 12, a behavior decision-making module 13, a prediction module 14, a motion planning module 15, a motion control module 17, and a positioning module 18. That is, the control apparatus 10 of the vehicle implements these function modules by executing a program (software) by a processor. However, the control apparatus 10 of the vehicle may implement all or some of these function modules by using hardware such as an LSI (Large Scale Integration, large scale integration) and an ASIC (Application Specific Integrated Circuit, application specific integrated circuit), or may implement all or some of these function modules by using a combination of software and hardware. Optionally, the control apparatus 10 further stores a high definition map (High Definition Map, HD Map) 11. Optionally, the control apparatus 10 further includes a collection calibration module 16.

The path planning module 12 is configured to plan a path planning of the vehicle 1 based on the high definition map 11, or perception information of the camera 20 and the radar 30, or the like. The behavior decision-making module 13 is configured to implement a human-like driving decision, for example, decisions such as traveling, car following, turning, lane changing, and parking. The prediction module 14 is configured to predict a motion trajectory and an intention of a road traffic participant such as another vehicle or pedestrian. The motion planning module 15 is configured to plan a motion behavior of the vehicle 1 including a traveling trajectory and a traveling speed. The collection calibration module 16 is configured to obtain collected traveling data, to calibrate a vehicle-mounted device such as a camera or a radar, an ECU parameter, a parameter in an ADAS algorithm model, and the like. The motion control module 17 is configured to generate, based on a planning result of the motion planning module 15, control instructions for sending to the power system 70, the steering system 80, and the braking system 90. The positioning module 18 can position the current position of the vehicle 1 by combining information about the GNSS and information about the IMU.

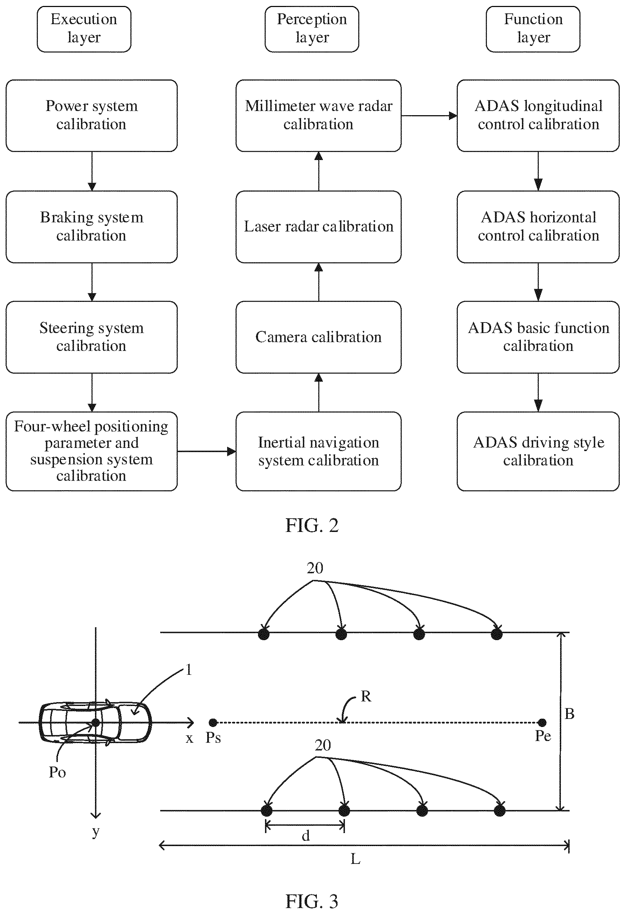

In the autonomous vehicle shown in FIG. 1, an advanced driving assist system used to implement an autonomous driving function is configured, and the advanced driving assist system includes a large quantity of parameters that need to be calibrated. FIG. 2 is a schematic diagram of a calibration implementation process of an advanced driving assist system configured in autonomous vehicle. As shown in FIG. 2, the calibration implementation process of the advanced driving assist system of the autonomous vehicle mainly includes calibration of a parameter of each subsystem at an execution layer, a perception layer, and a function layer. The execution layer involves power system calibration, braking system calibration, steering system calibration, four-wheel positioning parameter and suspension system calibration, and the like. The perception layer involves GNSS and INS (Initial Navigation System, inertial navigation system) calibration, camera calibration, laser radar calibration, millimeter wave radar calibration, ultrasonic radar calibration, and the like. The GNSS includes a GPS (Global Position System, global position system), a GLONASS (Global Navigation Satellite System, global navigation satellite system), a Galileo (Galileo navigation satellite system, Galileo navigation satellite system), and a BDS (BeiDou navigation satellite system, BeiDou navigation satellite system). The function layer involves longitudinal control module calibration, horizontal control module calibration, ADAS basic function calibration, ADAS driving style calibration that are of the vehicle. The longitudinal control is mainly speed control, and control of the vehicle speed is realized by controlling the brake, accelerator, and gear. Horizontal control is mainly used to control the course. By changing the torque or angle of the steering wheel, the vehicle can travel in the desired course. The ADAS basic functions include, for example, ACC (Adaptive Cruise Control, adaptive cruise control), LCC (Lane Center Control, lane center control), and ALC (Auto Lane Change, auto lane change). The driving style refers to a driving manner or a habitual driving method, and includes selection of a driving speed, selection of a driving spacing, and the like. The driving style includes, for example, a radical type, a stable type, or a cautious type.

To implement calibration, corresponding traveling data needs to be collected. The traveling data may be collected in a specified calibration station, calibration channel, or calibration site. FIG. 3 is a schematic diagram of a calibration site according to an embodiment of this application. The calibration site in FIG. 3 is used, for example, to calibrate a sensing apparatus such as a camera or a radar installed on the vehicle 1. As shown in FIG. 3, in a calibration site with a length L and a width B, a plurality of calibration boards 20 are disposed on two sides, and an interval between the two calibration boards 20 is d. The camera and radar sensing calibration board installed on the vehicle 1 collect sensing data of the camera and radar as traveling data, and calibrate parameters of the camera and radar based on the traveling data. For example, the camera calibration method may use a Zhang Zhengyou algorithm. For example, the parameter of the camera includes an intrinsic parameter, an extrinsic parameter, and a distortion parameter. For example, the parameter of the radar includes a rotation parameter and a translation parameter of the radar. The camera and radar may also be calibrated together.

Values of the length L, the width B, and the interval b may be set freely. The shape of the calibration site is not limited to the straight line in FIG. 3, and may also be a curve shape based on a specific calibration requirement. A manner of setting the calibration board 20 is not limited to the manner in FIG. 3. For example, it may be set that distances between every two calibration boards 20 are different. The calibration board 20 is, for example, an AprilTag (a visual positioning symbol) or a checkerboard calibration board. The AprilTag calibration board may use Tag16h5, Tag25h9, Tag36h11, or other types.

For a process of collecting traveling data in the calibration site shown in FIG. 3, there is usually a specific requirement, mainly including requirements on a traveling trajectory and a traveling speed of a vehicle during data collection. For example, a vehicle is usually required to travel at a designed speed based on a collection trajectory R. In a case of manual driving, it is difficult to accurately enable the vehicle to travel along the collection trajectory R at a designed speed. Therefore, quality of collected traveling data is not high, and a collection speed is slow. Consequently, calibration quality is poor, and calibration efficiency is low. In view of this, this application proposes an autonomous vehicle calibration method based on VIL (Vehicle in Loop, vehicle in loop)/-MOP (Motion Planning, motion planning) processing, and collecting traveling data with high quality and quickly in an automated manner. VIL is a simulation test that embeds a complete vehicle system into a simulation loop. It can also be understood as a virtual-real combination method that combines a simulation test and a real vehicle test. In this application, VIL/MOP processing in combination of the VIL and the MOP is used to control the vehicle 1 to automatically travel in the calibration site according to a requirement, so as to implement automatic collection of traveling data.

According to the autonomous vehicle calibration method provided in this application, the motion planning module 15 of the control apparatus 10 of the vehicle 1 obtains pre-stored designed trajectory information, where the designed trajectory information indicates a designed traveling trajectory of the vehicle. The pre-stored designed trajectory information includes coordinate information of a plurality of trajectory points on the designed traveling trajectory in a vehicle coordinate system. The motion planning module 15 obtains pre-stored reference point information, where the reference point information includes world coordinates of at least one reference point. The reference point is a point on the designed traveling trajectory. The reference point information may further include a designed course angle of the vehicle at the reference point. The motion planning module 15 converts, based on the reference point information, coordinates of the plurality of the trajectory points on the designed traveling trajectory into world coordinates through coordinate conversion, to obtain a traveling trajectory ("collection trajectory" for short) of the vehicle in the calibration site for collecting traveling data. Then, the motion planning module 15 plans a planning trajectory of the vehicle 1 in the calibration site based on the positioning information of the vehicle 1. The planning trajectory includes a collection trajectory and a start trajectory, and the start trajectory is used to enable the vehicle 1 to automatically travel from a current position to a start point of the collection trajectory. When the vehicle 1 travels, along the planning trajectory, to a collection start position on the collection trajectory, the collection calibration module 16 starts to collect traveling data, where the traveling data is used to calibrate a calibration object of the vehicle. The collection start position corresponds to a preset position on the designed traveling trajectory. For example, the collection start position may correspond to a start point of the designed traveling trajectory. That is, the collection start position may be, for example, a start point of the collection trajectory. The calibration object includes apparatuses at the perception layer such as the camera and the radar, apparatuses at the execution layer such as the braking system, the steering system, and the power system, and the basic ADAS functions at the function layer. When the calibration object is a camera, the traveling data is, for example, a shot image obtained by the camera photographing a target object (for example, a calibration board 20 in FIG. 3) that is set at a specified position in the calibration site.

When the calibration object is a radar, the traveling data is, for example, radar raw data (raw data) obtained by sensing the target object by the radar.

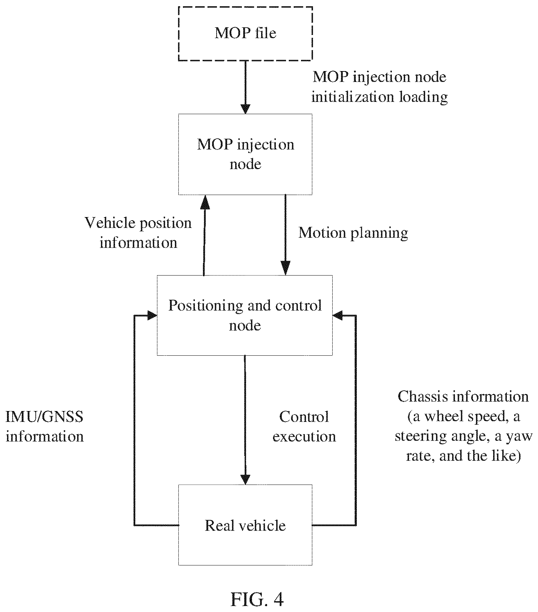

The following describes in detail the autonomous vehicle calibration method in the embodiments of this application with reference to FIG. 4 to FIG. 6.

FIG. 4 is a schematic diagram of a VIL/MOP processing principle according to an embodiment of this application. As shown in FIG. 4, first, a pre-stored MOP file is loaded to an MOP injection node, and MOP injection node initialization loading is performed. In this embodiment, the MOP injection node is a motion planning module 15 of a control apparatus 10. In some embodiments, a dedicated function module may be set in the control apparatus 10, to implement a function of the MOP injection node. The MOP file is stored, for example, in a memory of the control apparatus 10, but is not limited thereto. The MOP file includes, for example, designed trajectory information and designed speed information.

The designed trajectory information is information about a designed traveling trajectory of the vehicle 1 designed according to a calibration requirement. In this embodiment, the designed trajectory information is a formula or a point set in a vehicle coordinate system. That is, a position of a point on the designed traveling trajectory is defined by coordinates in the vehicle coordinate system. The vehicle coordinate system is used to describe a relative position relationship between an object around the vehicle and the vehicle, and the vehicle coordinate system can be used to describe a vehicle body posture. In this embodiment, the vehicle coordinate system uses a rectangular coordinate system defined by SAE (Society of Automotive Engineers, society of automotive engineers). In addition, in some embodiments, a rectangular coordinate system defined by an ISO (International Organization for Standardization, international organization for standardization) or an IMU-based rectangular coordinate system may also be used. The designed speed information is information about a designed traveling speed of the vehicle 1 on the designed traveling trajectory.

The designed traveling trajectory and the designed driving speed may be freely designed based on the calibration requirement. The designed traveling trajectory may be a curve shape, a straight line shape, or a shape of a combination of a straight line and a curve. The designed traveling speed may be that the vehicle 1 keeps a constant speed on the designed traveling trajectory, or may be that different traveling speeds are designed for different parts on the designed traveling trajectory. The designed traveling trajectory and the designed traveling speed information in the MOP file may be obtained through forward design, or may be obtained in a manual teaching manner. The manual teaching manner means that a vehicle is manually driven in a calibration site to demonstrate a trajectory and a speed when data is collected, and a traveling trajectory and a traveling speed at this time are recorded as a designed traveling trajectory and a designed traveling speed.

After the MOP file is loaded, to map the designed traveling trajectory to the calibration site, the motion planning module 15 used as the MOP injection node converts, based on pre-stored reference point information, coordinates of all points on the designed traveling trajectory into world coordinates. In this embodiment, the reference point information includes world coordinates of the reference point and a designed course angle of the vehicle 1 at the reference point. The designed course angle may indicate an included angle between a speed of a center of mass of the vehicle (that is, a traveling direction of the vehicle) and a coordinate axis of the world coordinate system in the world coordinate system. That is, the included angle between the vehicle coordinate system and the world coordinate system may be determined based on the designed course angle. The design course angle is designed based on the calibration site. In this embodiment, the reference point includes a start point of the designed traveling trajectory. In some embodiments, the reference point may not include the start point of the designed traveling trajectory, but includes at least one point other than the start point of the designed traveling trajectory. In some embodiments, the reference point information may not include a designed course angle, but includes world coordinates of two points on the designed traveling trajectory. The included angle between the vehicle coordinate system and the world coordinate system is determined based on the world coordinates of the two points.

In this embodiment, the world coordinate system uses a UTM (Universal Transverse Mercator Grid System, universal transversal mercator grid system) coordinate system. In some embodiments, a wgs-84 coordinate system (World Geodetic System-1984 Coordinate System) or the like may also be used.

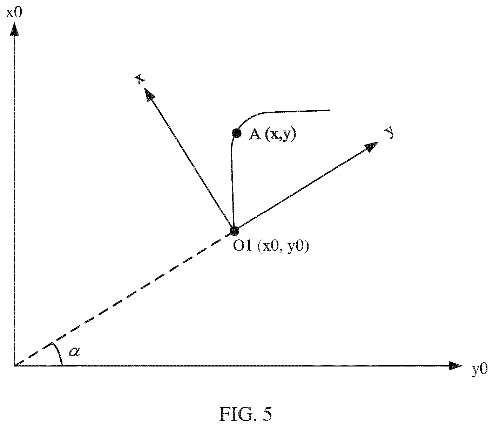

FIG. 5 is a schematic diagram of a coordinate conversion method according to an embodiment of this application. As shown in FIG. 5, coordinates of a reference point O1 in the world coordinate system are (x0,y0), coordinates of a trajectory point A on the designed traveling trajectory in the vehicle coordinate system are (x,y), and an included angle between the vehicle coordinate system and the world coordinate system is $\alpha$. In this case, the coordinates (x',y') of the trajectory point A in the world coordinate system may be calculated based on the following formula.

$$x' = \cos(\alpha) * x + \sin(\alpha) * y + x0$$

$$y' = \cos(\alpha) * y - \sin(\alpha) * x + y0$$

The motion planning module 15 used as an MOP injection node obtains current position information of the vehicle from a positioning module 18 used as the positioning node, and obtains planning trajectory of the vehicle 1 in the calibration site through planning based on the current position of the vehicle and the designed traveling trajectory. The planning trajectory includes a collection trajectory corresponding to the designed traveling trajectory, and a start trajectory used to enable the vehicle 1 to automatically travel from a current position to a start point of the collection trajectory. A collection start position and a collection end position are set on the collection trajectory. The collection start position is a position at which the collection of the traveling data starts. The collection end position is a position at which the collection of the traveling data ends. In this embodiment, the collection start position corresponds to the start point of the designed traveling trajectory, and the collection end position corresponds to the end point of the designed traveling trajectory. The collection start position and the collection end position may be preset in the designed trajectory information, and which point on the designed traveling trajectory is a collection start point or a collection end point corresponding to the collection start position or the collection end position; or may not be preset in the designed trajectory information, and the start point and the end point of the designed traveling trajectory are directly defaulted to correspond to the collection start position or the collection end position.

The motion planning module 15 plans a speed and an acceleration of the vehicle 1 on the planning trajectory based on the designed speed information. To ensure quality of the collected traveling data, a planning speed of the vehicle 1 on the collection trajectory in the planning trajectory needs to strictly comply with the designed speed information. There is no strict requirement for the planning speed of the vehicle 1 on the start trajectory, that is, the planning speed from the current position of the vehicle 1 to the start point of the collection trajectory, provided that the vehicle 1 can meet the requirement of the designed speed information when reaching the start point of the collection trajectory.

After the motion planning module 15 completes planning of the trajectory and the speed, the motion control module 17 used as the control node controls a motion behavior of the vehicle 1 based on a planning result, so that the vehicle 1 automatically travels based on the planning trajectory and speed. The motion control module 17 further controls a motion behavior of the vehicle 1 based on the obtained chassis information of the vehicle 1. The chassis information includes, for example, information such as a wheel speed, a steering angle, and a yaw rate. As described above, in this embodiment of this application, the positioning and control node is, for example, the positioning module 18 and the motion control module 17 that are of the control apparatus 10. In some embodiments, the positioning and control node may alternatively be a module that has a related function and that is of a mobile data center (Mobile Data Center, MDC) used as an autonomous driving controller.

In a process in which the vehicle 1 automatically travels based on the planning trajectory and speed, the positioning module 18 obtains information from the GNSS 50 and the IMU 60, and determines current position information of the vehicle 1 based on the obtained information. The current position information is provided to the motion planning module 15. In a process in which the vehicle 1 automatically travels, the motion planning module 15 may perform real-time planning and adjustment on the trajectory and the speed of the vehicle 1 based on the current position information.

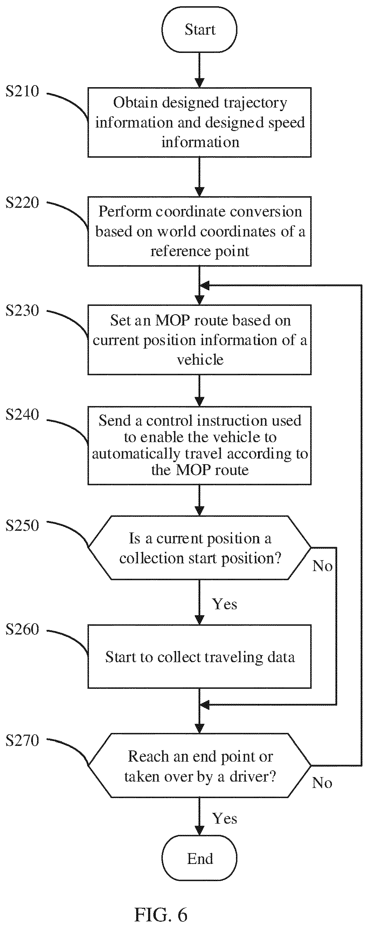

FIG. 6 is a schematic flowchart of an autonomous vehicle calibration method based on VIL/MOP processing according to an embodiment of this application. The vehicle 1 may be driven by a driver to an initial position of a calibration site, or may be directly transported to an initial position of a calibration site after assembly is completed on a production assembly line. After the driver or a staff turns on an autonomous driving switch of the vehicle 1 and starts an application program having a calibration function, the control apparatus 10 starts to perform the method shown in FIG. 6. As shown in FIG. 6, the method includes steps S210 to S270. With reference to the scenario in FIG. 3, the following describes processing of steps S210 to S270 in detail.

S210: Obtain designed trajectory information and designed speed information. As described above, the designed trajectory information and the designed speed information are included in a pre-stored MOP file, and the designed trajectory information includes coordinate information of a plurality of trajectory points on the designed traveling trajectory in a vehicle coordinate system. The MOP file may be, for example, pre-stored in a memory inside the vehicle 1, or may be obtained from an external device that is communicatively connected to the vehicle 1. In FIG. 3, a vehicle 1 is at an initial position Po of a calibration site, and designed trajectory information and designed speed information are obtained by obtaining the MOP file.

S220: Perform coordinate conversion based on the world coordinates of the reference point. Based on the pre-stored world coordinates of the reference point, coordinates of all trajectory points on the designed traveling trajectory are converted into world coordinates by using the coordinate conversion method in FIG. 5 described above. The world coordinates of the reference point may be, for example, pre-stored in a memory inside the vehicle 1, or may be obtained from an external device that is communicatively connected to the vehicle 1.

In FIG. 3, coordinate conversion is performed on the designed trajectory information based on the obtained world coordinates of a start point Ps to obtain the collection trajectory R. The collection start position is the start point Ps of the collection trajectory R, and the collection end position is an end point Pe of the collection trajectory R.

S230: Set an MOP route based on the current position information. In other words, the planning trajectory is generated based on the current position information of the vehicle 1, and the planning speed on the planning trajectory is generated based on the setting speed information. As described above, the generated planning trajectory includes a collection trajectory corresponding to the designed traveling trajectory, and a start trajectory from a current position of the vehicle 1 to a start point of the collection trajectory.

In FIG. 3, in an initial phase, an MOP route from an initial position Po to a collection start position Ps, and then from the collection start position Ps to a collection end position Pe along a collection trajectory R is set. The speed on the collection trajectory R is planned based on the designed speed information obtained in S210. In addition, after the vehicle 1 starts to automatically travel according to the MOP route in the initial phase, real-time planning and adjustment may be performed on a trajectory and a speed that reach an end point of the MOP route based on a change of a current position in a driving process of the vehicle.

The initial position Po and the collection start position Ps are different positions. A reason is that, by setting a specific preparation distance, the vehicle 1 reaches a specific speed at the collection start position Ps can be ensured. In this way, even if there is a special requirement such as that the vehicle 1 needs to keep a constant speed when the traveling data is collected, such a requirement can be met. In addition, because the initial position Po is not a position on the collection trajectory R, and the traveling data has not been collected at the position, position precision of the vehicle 1 does not affect collection quality of the traveling data in this case. Therefore, when the vehicle 1 is set at an initial stage, the vehicle 1 only needs to be placed in a specific range centered on the initial position Po, instead of being set at the initial position Po. The vehicle 1 can automatically travel from the initial position Po or a position near the initial position Po to the collection start position Ps.

S240: Send a control instruction used to enable the vehicle to automatically travel according to the MOP route. Based on the set MOP route, a control instruction used to send to the power system 70, the steering system 80, the braking system 90, and the like of the vehicle 1 is generated. The power system 70, the steering system 80, the braking system 90, and the like execute the control instruction, so that the vehicle 1 automatically travels according to the MOP route.

S250: Determine whether a current position of the vehicle 1 is a collection start position. In an automatic traveling process of the vehicle 1, current position information of the vehicle 1 is obtained based on IMU information, GNSS information, and the like, and whether the vehicle 1 reaches a collection start position Ps is determined. If the vehicle 1 reaches the collection start position Ps, perform S260; or if the vehicle 1 does not reach the collection start position Ps, perform S270.

S260: Start to collect traveling data. The traveling data is, for example, an image captured by photographing the calibration board 2 by the camera, or radar raw data obtained by the radar sensing calibration board 2. The obtained traveling data may be used to perform online calibration on calibration objects such as a camera and a radar, and a calibration result is directly output, but this is not limited thereto. For example, the obtained traveling data may be further stored, and calibrated later. In addition to storing the calibration result in the internal memory of the vehicle 1, the calibration result may also be uploaded to the management platform by using a communication connection to an external management platform, and the management platform uniformly manages information of a plurality of vehicles. In some embodiments, the processing in this step may also be replaced with starting the calibration mode.

S270: Determine whether the vehicle reaches an end point or is taken over by the driver. If the vehicle reaches the end point or is taken over by the driver, the process ends; or if the vehicle does not reach the end point or is not taken over by the driver, the process returns to S230. The end point herein may be, for example, a collection end position Pe on the collection trajectory R. When the vehicle has reached the collection end position Pe or has been taken over by the driver, the process ends, which may also be understood as ending the collection of the traveling data or ending the calibration mode. In some embodiments, before the process is ended, whether the calibration is successful is determined, and a determining result of successful/failed calibration is recorded.

According to the autonomous vehicle calibration method in this embodiment of this application, the vehicle 1 automatically travels from the collection start position Ps to the collection end position Pe based on the pre-designed traveling trajectory and traveling speed, and collects traveling data. Compared with manual driving, autonomous driving can accurately perform horizontal and vertical trajectory tracking control on the vehicle. Therefore, quality of the collected traveling data can be improved, and calibration precision can be improved. In addition, because the quality of the collected traveling data is high, compared with a case of manual driving in the prior art, data required for calibration may be collected by using a relatively short designed traveling trajectory. Specifically, for example, in the scenario in FIG. 3, a designed traveling trajectory of about 70 meters is required in the prior art. However, according to the method in this application, calibration of a camera and a radar may be completed by using a designed traveling trajectory of about 50 meters, which is actually equivalent to improving a data collection speed.

According to the autonomous vehicle calibration method in this embodiment of this application, an unmanned operation can be implemented in an entire calibration process, and an all-weather collection operation can be implemented, so that a data collection speed is improved while a calibration success rate is improved by reducing interference caused by human driving, thereby better meeting the demand of mass production scale of the vehicles.

The autonomous vehicle calibration method in the embodiments of this application is described above. However, this embodiment of this application is not limited thereto. For example, the pre-stored designed trajectory information may also be coordinate information of a point on the designed traveling trajectory in a world coordinate system. In this case, coordinate conversion processing may be omitted. However, in a case in which the pre-stored designed trajectory information is coordinate information in a vehicle coordinate system, when data collection is performed on a plurality of same calibration sites located at different locations, the same designed traveling trajectory can be automatically mapped to the calibration sites of the different locations by changing the reference point information, and an MOP file does not need to be separately designed for each calibration site. Therefore, a design workload can be reduced. Alternatively, the collection start position may not correspond to the start point of the designed traveling trajectory, but corresponds to another point on the designed traveling trajectory. Alternatively, the collection end position may not correspond to the end point of the designed traveling trajectory, but corresponds to another point on the designed traveling trajectory.

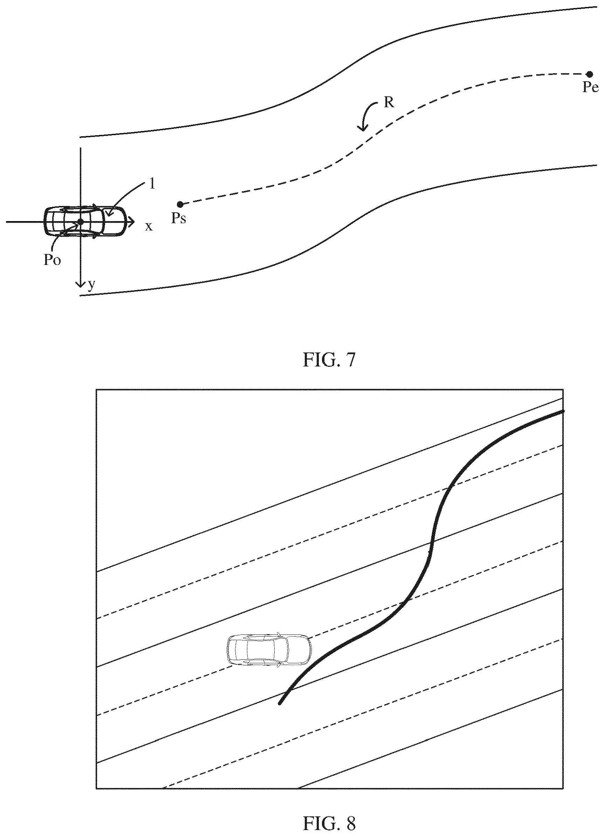

FIG. 3 schematically lists an example in which the collection trajectory R is in a straight line shape when the traveling data used to calibrate the camera and the radar is collected. However, in some embodiments, as shown in FIG. 7, the collection trajectory R may also be in a curve shape. The shape of the collection trajectory R may be designed based on a specific calibration requirement. For example, when the traveling data of the steering system used to calibrate the execution layer is collected, the collection trajectory R may be a curve.

In some embodiments, in addition to collecting traveling data of a camera, a radar, and the like that are used to calibrate a perception layer, traveling data such as GNSS data, INS data, and a wheel speed, a yaw rate, and a steering wheel angle that are of the vehicle 1 may be collected at the same time, and the data is centrally stored. Timestamps are added to all collected data. When calibration of the perception layer or the function layer is performed subsequently, processing such as interpolation compensation may be performed on data with different sampling frequencies based on the timestamp, to ensure time synchronization of various data. In this way, efficient collection of integrated comprehensive data can be implemented.

In some embodiments, a trajectory tracking process of the vehicle 1 may be further visualized, and displayed on a display screen of a mobile terminal held by a vehicle-mounted display apparatus, a management platform, or a calibration engineer. In this case, as shown in FIG. 8, the planning trajectory shown by the thick solid line and information such as the current position and orientation of the vehicle 1 may be displayed on the display screen, so as to determine whether the vehicle 1 deviates from the planning trajectory. In addition, as shown in FIG. 8, a virtual lane line shown by a thin solid line, a virtual lane center line shown by a dashed line, and the like may be further displayed.

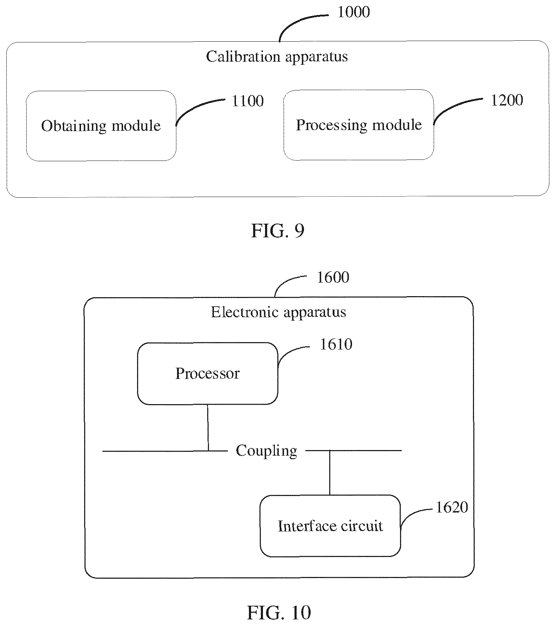

FIG. 9 is a schematic diagram of a structure of an autonomous vehicle calibration apparatus according to an embodiment of this application. The calibration apparatus may be a vehicle-mounted terminal, or may be a chip or a chip system inside the vehicle-mounted terminal, and may implement the autonomous vehicle calibration method and the optional embodiments that are described with reference to FIG. 1 to FIG. 8. As shown in FIG. 9, the calibration apparatus 1000 includes an obtaining module 1100 and a processing module 1200.

The obtaining module 1100 is configured to obtain first trajectory information. The obtaining module 1100 is further configured to obtain position information of a vehicle. The processing module 1200 is configured to generate a planning trajectory based on the first trajectory information and the position information of the vehicle that are obtained by the obtaining module 1100. The processing module 1200 is further configured to: when the vehicle automatically travels to a first position along the generated planning trajectory, start to collect traveling data. The first position corresponds to a preset position on a first trajectory indicated by the first trajectory information.

When the first trajectory information is information in a vehicle coordinate system, the processing module 1200 is further configured to: convert the first trajectory information into second trajectory information that is in a world coordinate system, and generate a planning trajectory based on the second trajectory information and the position information of the vehicle. In this case, the obtaining module 1100 may obtain first coordinate information, where the first coordinate information indicates coordinates of the preset position in the world coordinate system; and the processing module 1200 converts, based on the first coordinate information obtained by the obtaining module 1100, the first trajectory information into the second trajectory information that is in the world coordinate system.

It should be understood that the calibration apparatus in this embodiment of this application may be implemented by software, for example, implemented by a computer program or an instruction having the foregoing functions. A corresponding computer program or instruction may be stored in a memory in a vehicle-mounted terminal, and the processor reads the corresponding computer program or instruction in the memory to implement the foregoing functions. Alternatively, the calibration apparatus in this embodiment of this application may be implemented by hardware. The processing module 1200 is a processor, and the obtaining module 1100 is a transceiver circuit or an interface circuit. Alternatively, the calibration apparatus in this embodiment of this application may be implemented by a combination of a processor and a software module.

It should be understood that, for related design details and technical effects of the calibration apparatus, refer to the description in the method shown in FIG. 1 to FIG. 8. Details are not described herein again.

FIG. 10 is a schematic diagram of a structure of an electronic apparatus according to an embodiment of this application. The electronic apparatus may be used as an autonomous vehicle calibration apparatus, to perform the autonomous vehicle calibration method and optional embodiments described with reference to FIG. 1 to FIG. 8. The electronic apparatus may be a vehicle-mounted terminal, or may be a chip or a chip system inside the vehicle-mounted terminal. As shown in FIG. 10, the electronic apparatus 1600 includes: a processor 1610, and an interface circuit 1620 coupled to the processor 1610. It should be understood that, although FIG. 10 shows only one processor and one interface circuit, the electronic apparatus 1600 may include another quantity of processors and interface circuits.

The interface circuit 1620 is configured to communicate with another component of the terminal, for example, a memory or another processor. The processor 1610 is configured to perform signal interaction with another component by using the interface circuit 1620. The interface circuit 1620 may be an input/output interface of the processor 1610.

For example, the processor 1610 reads, by using the interface circuit 1620, computer programs or instructions in the memory coupled to the interface circuit 1620, and decodes and executes the computer programs or instructions. It should be understood that the computer programs or instructions may include the foregoing terminal function program, or may include the foregoing function program of the calibration apparatus applied in the terminal. When the corresponding function program is decoded and executed by the processor 1610, the vehicle-mounted terminal or the calibration apparatus in the vehicle-mounted terminal may be enabled to implement the solution in the autonomous vehicle calibration method provided in the embodiments of this application.

Optionally, these terminal function programs are stored in a memory outside the electronic apparatus 1600. When the terminal function programs are decoded and executed by the processor 1600, some or all content of the terminal function programs is temporarily stored in the memory.

Optionally, these terminal function programs are stored in a memory inside the electronic apparatus 1600. When the memory inside the electronic apparatus 1600 stores the terminal function programs, the electronic apparatus 1600 may be set in the terminal of the embodiment of the present invention.

Optionally, some content of the terminal function programs is stored in a memory outside the electronic apparatus 1800, and other content of the terminal function programs is stored in a memory inside the electronic apparatus 1800.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of embodiments of this application.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

An embodiment of this application further provides a computer-readable storage medium. The computer-readable storage medium stores a computer program. When being executed by a processor, the program is used to perform at least one of the solutions described in the foregoing embodiments.

The computer storage medium in this embodiment of this application may be any combination of one or more computer-readable media. The computer-readable medium may be a computer-readable signal medium or a computer-readable storage medium. The computer-readable storage medium may be, but is not limited to, an electric, magnetic, optical, electromagnetic, infrared, or semiconductor system, apparatus, or device, or any combination thereof. More specific examples (non-exhaustive list) of the computer-readable storage medium include: an electrical connection having one or more wires, a portable computer disk, a hard disk, a random access memory (RAM), a read-only memory (ROM), an erasable programmable read-only memory (EPROM, Erasable Programmable Read Only Memory, or flash memory), an optical fiber, a portable compact disc read-only memory (CD-ROM), an optical storage device, a magnetic storage device, or any suitable combination thereof. In this specification, the computer-readable storage medium may be any tangible medium that includes or stores a program, and the program may be used by or in combination with an instruction execution system, apparatus, or device.

The computer-readable signal medium may include a data signal that is propagated in a baseband or propagated as part of a carrier, where the data signal carries computer-readable program code. Such a propagated data signal may be in a plurality of forms, including but not limited to, an electromagnetic signal, an optical signal, or any suitable combination thereof. The computer-readable signal medium may alternatively be any computer-readable medium other than the computer-readable storage medium. The computer-readable medium may send, propagate, or transmit a program used by or in combination with an instruction execution system, apparatus, or device.

Program code included in the computer-readable medium may be transmitted by using any proper medium, including but not limited to wireless, electric wire, optical cable, RF (Radio Frequency, radio frequency), or any suitable combination thereof.

Computer program code used to perform operations in this application may be written in one or more program design languages or a combination thereof. The program design language includes an object-oriented program design language such as Java, Smalltalk, and C++, and further includes a conventional procedural program design language such as a "C" language or a similar program design language. The program code may be executed entirely on a user computer, or some may be executed on a user computer as a separate software package, or some may be executed on a user computer while some is executed on a remote computer, or the code may be entirely executed on a remote computer or a server. In a case involving a remote computer, the remote computer may be connected to a user computer through any type of network, including a wireless local area network (LAN, Wireless Local Area Network) or a wide area network (WAN, Wide Area Network), or may be connected to an external computer (for example, through the Internet provided by an Internet service provider).

**Claims**

1. An autonomous vehicle calibration method, comprising:

   obtaining first trajectory information;
   obtaining position information of a vehicle (1);
   generating a planning trajectory (Po to Ps, R) based on the first trajectory information and the position information, **characterised in that** the generated planning trajectory includes a collection trajectory (R) and a start trajectory (Po to Ps), wherein the collection trajectory corresponds to a first trajectory designed based on a calibration requirement, and is a trajectory used to collect the traveling data, and wherein the start trajectory corresponds to a trajectory from an initial position (Po) of the vehicle indicated by the position information of the vehicle to a collection start position (Ps) of the collection trajectory (R); and
   wherein the vehicle automatically travels along the start trajectory from the initial position (Po) to the collection start position (Ps), and starts to collect traveling data from the collection start position (Ps).

2. The calibration method according to claim 1, wherein the first trajectory information is information in a vehicle coordinate system, and the method further comprises:

   converting the first trajectory information into second trajectory information in a world coordinate system; and
   generating the planning trajectory (Po to Ps, R) based on the second trajectory information and the position information.

3. The calibration method according to claim 2, wherein the method further comprises:

   obtaining first coordinate information, wherein the first coordinate information indicates coordinates of the preset position in the world coordinate system; and
   converting, based on the first coordinate information, the first trajectory information into the second trajectory information in the world coordinate system.

4. The calibration method according to any one of claims 1 to 3, wherein
   the vehicle coordinate system comprises a rectangular coordinate system defined by the society of automotive engineers, SAE, a rectangular coordinate system defined by the international organization for standardization, ISO, or a rectangular coordinate system defined based on an inertial measurement unit, IMU.

5. The calibration method according to any one of claims 1 to 4, wherein

   the traveling data is used to calibrate a calibration object of the vehicle (1);
   the calibration object comprises one or more of a camera, a radar, an electronic control unit, ECU, parameter, or a parameter of an advanced driver assistance system, ADAS, algorithm model; and
   the traveling data comprises one or more of the following data: data obtained by photographing a target object by the camera, data obtained by measuring the target object by the radar, a wheel speed of the vehicle, a yaw rate of the vehicle, and a steering wheel angle of the vehicle, wherein the target object is placed at a specified position.

6. An autonomous vehicle calibration apparatus, comprising an obtaining module and a processing module, wherein

   the obtaining module is configured to obtain first trajectory information;
   the obtaining module is further configured to obtain position information of a vehicle (1);
   the processing module is configured to generate a planning trajectory (Po to Ps, R) based on the first trajectory information and the position information, **characterised in that** the generated planning trajectory includes a collection trajectory (R) and a start trajectory (Po to Ps), wherein the collection trajectory corresponds to a first trajectory designed based on a calibration requirement, and is a trajectory used to collect the traveling data, and wherein the start trajectory corresponds to a trajectory from an initial position (Po) of the vehicle indicated by the position information of the vehicle to a collection start position (Ps) of the collection trajectory (R); and wherein
   the processing module is further configured to cause the vehicle to automatically travel along the start trajectory from the initial position (Po) to the collection start position (Ps) and to start to collect travelling data from the collection start position (Ps).

**7.** The calibration apparatus according to claim 6, wherein

the first trajectory information is information in a vehicle coordinate system;
the processing module is further configured to convert the first trajectory information into second trajectory information in a world coordinate system; and
the processing module is further configured to generate the planning trajectory (Po to Ps, R) based on the second trajectory information and the position information.

**8.** The calibration apparatus according to claim 7, wherein

the obtaining module is further configured to obtain first coordinate information, wherein the first coordinate information indicates coordinates of the preset position in the world coordinate system; and
the processing module is further configured to convert, based on the first coordinate information, the first trajectory information into the second trajectory information in the world coordinate system.

**9.** An electronic apparatus, comprising a processor and an interface circuit, wherein the processor is coupled to a memory through the interface circuit, and the processor is configured to execute program code in the memory, to enable the processor to perform the steps of:

obtaining, from an obtaining module, first trajectory information;
obtaining, from the obtaining module, position information (Po) of a vehicle (1);
generating, by the processor, a planning trajectory (Po to Ps, R) based on the first trajectory information and the position information, **characterised in that** the generated planning trajectory includes a collection trajectory and a start trajectory, wherein the collection trajectory corresponds to a first trajectory designed based on a calibration requirement, and is a trajectory used to collect the traveling data, and wherein the start trajectory corresponds to a trajectory from an initial position of the vehicle indicated by the position information of the vehicle to a collection start position (Ps) of the collection trajectory; and wherein
the processor is further configured to cause the vehicle to automatically travel along the start trajectory from the initial position (Po) to the collection start point (Ps) and to start to collect travelling data from the collection start point (Ps).

**Patentansprüche**

**1.** Kalibrierverfahren für autonome Fahrzeuge, umfassend:

Erlangen von ersten Trajektorieninformationen;
Erlangen von Positionsinformationen eines Fahrzeugs (1);
Erzeugen einer Planungstrajektorie (Po bis Ps, R) basierend auf den ersten Trajektorieninformationen und den Positionsinformationen, **dadurch gekennzeichnet, dass** die erzeugte Planungstrajektorie eine Sammeltrajektorie (R) und eine Starttrajektorie (Po bis Ps) beinhaltet, wobei die Sammeltrajektorie einer ersten Trajektorie entspricht, die basierend auf einer Kalibrierungsanforderung ausgelegt wird, und eine Trajektorie ist, die verwendet wird, um die Fahrdaten zu sammeln, und wobei die Starttrajektorie einer Trajektorie von einer Anfangsposition (Po) des Fahrzeugs, die durch die Positionsinformationen des Fahrzeugs angezeigt wird, zu einer Sammelstartposition (Ps) der Sammeltrajektorie (R) entspricht; und wobei das Fahrzeug automatisch entlang der Starttrajektorie von der Anfangsposition (Po) zu der Sammelstartposition (Ps) fährt und beginnt, Fahrdaten von der Sammelstartposition (Ps) aus zu sammeln.

**2.** Kalibrierverfahren gemäß Anspruch 1, wobei die ersten Trajektorieninformationen Informationen in einem Fahrzeugkoordinatensystem sind, und das Verfahren ferner Folgendes umfasst:

Konvertieren der ersten Trajektorieninformationen in zweite Trajektorieninformationen in einem Weltkoordinatensystem; und
Erzeugen der Planungstrajektorie (Po bis Ps, R) basierend auf den zweiten Trajektorieninformationen und den Positionsinformationen.

**3.** Kalibrierverfahren gemäß Anspruch 2, wobei das Verfahren ferner Folgendes umfasst:

Erlangen von ersten Koordinateninformationen, wobei die ersten Koordinateninformationen Koordinaten der voreingestellten Position in dem Weltkoordinatensystem angibt; und
Konvertieren der ersten Trajektorieninformationen basierend auf den ersten Koordinateninformationen in die zweiten Trajektorieninformationen in dem Weltkoordinatensystem.

**4.** Kalibrierverfahren gemäß einem der Ansprüche 1 bis 3, wobei das Fahrzeugkoordinatensystem ein von der Society of Automotive Engineers (SAE) definiertes rechtwinkliges Koordinatensystem, ein von der Internationalen Organisation für Normung (International Organization for Standardization, ISO) definiertes rechtwinkliges Koordinatensystem oder ein basierend auf einer Inertialmesseinheit (Inertial Measurement Unit, IMU) definiertes rechtwinkliges Koordinatensystem umfasst.

5. Kalibrierverfahren gemäß einem der Ansprüche 1 bis 4, wobei die Fahrdaten dazu verwendet werden, ein Kalibrierobjekt des Fahrzeugs (1) zu kalibrieren;

das Kalibrierobjekt eine oder mehrere Kameras, ein Radar, einen Parameter einer elektronischen Steuereinheit (Electronic Control Unit, ECU) oder einen Parameter eines Algorithmusmodells eines fortgeschrittenen Fahrerassistenzsystems (Advanced Driver Assistance System, ADAS) umfasst; und die Fahrdaten eine oder mehrere der folgenden Daten umfassen: Daten, die durch Fotografieren eines Zielobjekts durch die Kamera erlangt werden, Daten, die durch Messen des Zielobjekts durch das Radar erlangt werden, eine Radgeschwindigkeit des Fahrzeugs, eine Gierrate des Fahrzeugs und einen Lenkradwinkel des Fahrzeugs, wobei das Zielobjekt an einer bestimmten Position angeordnet ist.

6. Kalibriergerät für autonome Fahrzeuge, umfassend ein Erlangungsmodul und ein Verarbeitungsmodul, wobei das Erlangungsmodul dazu konfiguriert ist, erste Trajektorieninformationen zu erlangen;

das Erlangungsmodul ferner dazu konfiguriert ist, Positionsinformationen eines Fahrzeugs (1) zu erlangen; das Verarbeitungsmodul dazu konfiguriert ist, eine Planungstrajektorie (Po bis Ps, R) basierend auf den ersten Trajektorieninformationen und den Positionsinformationen zu erzeugen, **dadurch gekennzeichnet, dass** die erzeugte Planungstrajektorie eine Sammeltrajektorie (R) und eine Starttrajektorie (Po bis Ps) beinhaltet, wobei die Sammeltrajektorie einer ersten Trajektorie entspricht, die basierend auf einer Kalibrierungsanforderung ausgelegt wird, und eine Trajektorie ist, die verwendet wird, um die Fahrdaten zu sammeln, und wobei die Starttrajektorie einer Trajektorie von einer Anfangsposition (Po) des Fahrzeugs, die durch die Positionsinformationen des Fahrzeugs angezeigt wird, zu einer Sammelstartposition (Ps) der Sammeltrajektorie (R) entspricht; und wobei das Verarbeitungsmodul ferner dazu konfiguriert ist, das Fahrzeug zu veranlassen, automatisch entlang der Starttrajektorie von der Anfangsposition (Po) zu der Sammelstartposition (Ps) zu fahren und zu beginnen, Fahrdaten von der Sammelstartposition (Ps) aus zu sammeln.

7. Kalibriergerät gemäß Anspruch 6, wobei

die erste Trajektorieninformationen Informationen in einem Fahrzeugkoordinatensystem sind; das Verarbeitungsmodul ferner dazu konfiguriert ist, die ersten Trajektorieninformationen in zweite Trajektorieninformationen in einem Weltkoordinatensystem zu konvertieren; und das Verarbeitungsmodul ferner dazu konfiguriert ist, die Planungstrajektorie (Po bis Ps, R) basierend auf den zweiten Trajektorieninformationen und den Positionsinformationen zu erzeugen.

8. Kalibriergerät gemäß Anspruch 7, wobei

das Erlangungsmodul ferner dazu konfiguriert ist, erste Koordinateninformationen zu erlangen, wobei die ersten Koordinateninformationen Koordinaten der voreingestellten Position in dem Weltkoordinatensystem angibt; und das Verarbeitungsmodul ferner dazu konfiguriert ist, basierend auf den ersten Koordinateninformationen, die ersten Trajektorieninformationen in die zweiten Trajektorieninformationen in dem Weltkoordinatensystem zu konvertieren.

9. Elektronisches Gerät, umfassend einen Prozessor und eine Schnittstellenschaltung, wobei der Prozessor über die Schnittstellenschaltung mit einem Speicher verbunden ist und der Prozessor dazu konfiguriert ist, einen Programmcode in dem Speicher auszuführen, um den Prozessor in die Lage zu versetzen, die folgenden Schritte durchzuführen:

Erlangen von ersten Trajektorieninformationen aus einem Erlangungsmodul; Erlangen von Positionsinformationen (Po) eines Fahrzeugs (1) aus dem Erlangungsmodul; Erzeugen, durch den Prozessor, einer Planungstrajektorie (Po bis Ps, R) basierend auf den ersten Trajektorieninformationen und den Positionsinformationen, **dadurch gekennzeichnet, dass** die erzeugte Planungstrajektorie eine Sammeltrajektorie und eine Starttrajektorie beinhaltet, wobei die Sammeltrajektorie einer ersten Trajektorie entspricht, die basierend auf einer Kalibrierungsanforderung ausgelegt wird, und eine Trajektorie ist, die verwendet wird, um die Fahrdaten zu sammeln, und wobei die Starttrajektorie einer Trajektorie von einer Anfangsposition des Fahrzeugs, die durch die Positionsinformationen des Fahrzeugs angezeigt wird, zu einer Sammelstartposition (Ps) der Sammeltrajektorie entspricht; und wobei der Prozessor ferner dazu konfiguriert ist, das Fahrzeug zu veranlassen, automatisch entlang der Starttrajektorie von der Anfangsposition (Po) zu dem Sammelstartpunkt (Ps) zu fahren und zu beginnen, Fahrdaten von dem Sammelstartpunkt (Ps) aus zu sammeln.

## Revendications

1. Procédé d'étalonnage de véhicule autonome, comprenant :

   l'obtention de premières informations de trajectoire ;
   l'obtention d'informations de position d'un véhicule (1) ;
   la génération d'une trajectoire de planification (Po à Ps, R) sur la base des premières informations de trajectoire et des informations de position, **caractérisé en ce que** la trajectoire de planification générée comporte une trajectoire de collecte (R) et une trajectoire de départ (Po à Ps), dans lequel la trajectoire de collecte correspond à une première trajectoire conçue sur la base d'une exigence d'étalonnage et est une trajectoire utilisée pour collecter les données de déplacement, et dans lequel la trajectoire de départ correspond à une trajectoire allant d'une position initiale (Po) du véhicule indiquée par les informations de position du véhicule à une position de départ de collecte (Ps) de la trajectoire de collecte (R) ; et
   dans lequel le véhicule se déplace automatiquement le long de la trajectoire de départ depuis la position initiale (Po) jusqu'à la position de départ de collecte (Ps), et commence à collecter des données de déplacement à partir de la position de départ de collecte (Ps).

2. Procédé d'étalonnage selon la revendication 1, dans lequel
   les premières informations de trajectoire sont des informations dans un système de coordonnées du véhicule, et le procédé comprend également :

   la conversion des premières informations de trajectoire en secondes informations de trajectoire dans un système de coordonnées mondial ; et
   la génération de la trajectoire de planification (Po à Ps, R) sur la base des secondes informations de trajectoire et des informations de position.

3. Procédé d'étalonnage selon la revendication 2, dans lequel le procédé comprend également :

   l'obtention de premières informations de coordonnées, dans lequel les premières informations de coordonnées indiquent des coordonnées de la position prédéfinie dans le système de coordonnées mondial ; et
   la conversion, sur la base des premières informations de coordonnées, des premières informations de trajectoire en secondes informations de trajectoire dans le système de coordonnées mondial.

4. Procédé d'étalonnage selon l'une quelconque des revendications 1 à 3, dans lequel
   le système de coordonnées du véhicule comprend un système de coordonnées rectangulaire défini par la société des ingénieurs de l'automobile, SAE, un système de coordonnées rectangulaire défini par l'organisation internationale de normalisation, ISO, ou un système de coordonnées rectangulaire défini sur la base d'une unité de mesure inertielle, IMU.

5. Procédé d'étalonnage selon l'une quelconque des revendications 1 à 4, dans lequel

   les données de déplacement sont utilisées pour étalonner un objet d'étalonnage du véhicule (1) ;
   l'objet d'étalonnage comprend un ou plusieurs éléments parmi une caméra, un radar, un paramètre d'unité de commande électronique, un ECU, ou un paramètre d'un modèle d'algorithme de système avancé d'assistance à la conduite, ADAS ; et
   les données de déplacement comprennent une ou plusieurs des données suivantes : des données obtenues en photographiant un objet cible par la caméra, des données obtenues en mesurant l'objet cible par le radar, une vitesse de roue du véhicule, une vitesse de lacet du véhicule, et un angle de volant du véhicule, dans lequel l'objet cible est placé à une position spécifiée.

6. Appareil d'étalonnage de véhicule autonome, comprenant un module d'obtention et un module de traitement, dans lequel

   le module d'obtention est configuré pour obtenir de premières informations de trajectoire ;
   le module d'obtention est également configuré pour obtenir des informations de position d'un véhicule (1) ;
   le module de traitement est configuré pour générer une trajectoire de planification (Po à Ps, R) sur la base des premières informations de trajectoire et des informations de position, **caractérisé en ce que** la trajectoire de planification générée comporte une trajectoire de collecte (R) et une trajectoire de départ (Po à Ps), dans lequel la trajectoire de collecte correspond à une première trajectoire conçue sur la base d'une exigence d'étalonnage et est une trajectoire utilisée pour collecter les données de déplacement, et dans lequel la trajectoire de départ correspond à une trajectoire allant d'une position initiale (Po) du véhicule indiquée par les informations de position du véhicule à une position de départ de collecte (Ps) de la trajectoire de collecte (R) ; et dans lequel le module de traitement est également configuré pour amener le véhicule à se déplacer automatiquement le long de la trajectoire de départ depuis la position initiale (Po) jusqu'à la position de départ de collecte (Ps) et à commencer à collecter des données de déplacement à partir de la position de départ de collecte (Ps).

7. Appareil d'étalonnage selon la revendication 6, dans lequel les premières informations de trajectoire sont des informations dans un système de coordonnées du véhicule ;

le module de traitement est également configuré pour convertir les premières informations de trajectoire en secondes informations de trajectoire dans un système de coordonnées mondial ; et

le module de traitement est également configuré pour générer la trajectoire de planification (Po à Ps, R) sur la base des secondes informations de trajectoire et des informations de position.

8. Appareil d'étalonnage selon la revendication 7, dans lequel le module d'obtention est également configuré pour obtenir de premières informations de coordonnées, dans lequel les premières informations de coordonnées indiquent des coordonnées de la position prédéfinie dans le système de coordonnées mondial ; et le module de traitement est également configuré pour convertir, sur la base des premières informations de coordonnées, les premières informations de trajectoire en secondes informations de trajectoire dans le système de coordonnées mondial.

9. Appareil électronique, comprenant un processeur et un circuit d'interface, dans lequel le processeur est couplé à une mémoire par l'intermédiaire du circuit d'interface, et le processeur est configuré pour exécuter un code de programme dans la mémoire, afin de permettre au processeur de réaliser les étapes suivantes :

l'obtention, à partir d'un module d'obtention, de premières informations de trajectoire ;

l'obtention, à partir du module d'obtention, d'informations de position (Po) d'un véhicule (1) ;

la génération, par le processeur, d'une trajectoire de planification (Po à Ps, R) sur la base des premières informations de trajectoire et des informations de position, **caractérisé en ce que** la trajectoire de planification générée comporte une trajectoire de collecte et une trajectoire de départ, dans lequel la trajectoire de collecte correspond à une première trajectoire conçue sur la base d'une exigence d'étalonnage et est une trajectoire utilisée pour collecter les données de déplacement, et dans lequel la trajectoire de départ correspond à une trajectoire allant d'une position initiale du véhicule indiquée par les informations de position du véhicule à une position de départ de collecte (Ps) de la trajectoire de collecte ; et dans lequel le processeur est également configuré pour amener le véhicule à se déplacer automatiquement le long de la trajectoire de départ depuis la position initiale (Po) jusqu'au point de départ de collecte (Ps) et à commencer à collecter des données de déplacement à partir du point de départ de collecte (Ps).

Vehicle 1

10

| Control apparatus |
|---|
| High definition map — 11 |
| Path planning module — 12 |
| Behavior decision-making module — 13 |
| Prediction module — 14 |
| Motion planning module — 15 |
| Collection calibration module — 16 |
| Motion control module — 17 |
| Positioning module — 18 |

20 — Radar

30 — Camera

40 — Communication apparatus

50 — GNSS

60 — IMU

70 — Power system

80 — Steering system

90 — Braking system

FIG. 1

FIG. 2

FIG. 3

FIG. 4

FIG. 5

FIG. 6

FIG. 7

FIG. 8

1000

Calibration apparatus

Obtaining module — 1100

Processing module — 1200

FIG. 9

1600

Electronic apparatus

Processor — 1610

Coupling

Interface circuit — 1620

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019218353 A1
- US 2019064823 A1
- US 2019324463 A1